# EUROPÄISCHE PATENTSCHRIFT

(11) **EP 3 254 350 B1**
(45) Veröffentlichungstag und Bekanntmachung des Hinweises auf die Patenterteilung: **31.07.2019**
(21) Anmeldenummer: 16714830.3
(22) Anmeldetag: 29.03.2016
(51) Int. Cl.: H02B 13/045, H02B 1/22, H02B 13/075, H02B 13/035

(54) **KAPSELUNGSGEHÄUSEANORDNUNG**
CASING ARRANGEMENT
AGENCEMENT DE CUVE BLINDÉE

(30) Priorität: 01.04.2015 DE 102015205918
(43) Veröffentlichungstag der Anmeldung: 13.12.2017
(73) Patentinhaber: Siemens Aktiengesellschaft, 80333 München (DE)
(72) Erfinder: EHRLICH, Ulrike, 16562 Hohen Neuendorf OT Bergfelde (DE); SCHMIDT, Anne, 13585 Berlin (DE)
(86) Internationale Anmeldenummer: PCT/EP2016/056816
(87) Internationale Veröffentlichungsnummer: WO 2016/156327

(56) Entgegenhaltungen:
- EP-A2- 0 291 762
- WO-A1-91/06996
- WO-A1-2010/133464
- WO-A1-2013/152954
- DE-U1- 8 907 711

## Beschreibung

Die Erfindung betrifft eine Kapselungsgehäuseanordnung für eine Elektroenergieübertragungseinrichtung aufweisend einen Kapselungsgehäusegrundkörper mit einer sich im Wesentlichen quer zu einer Flanschachse erstreckenden Flanschöffnung.

Eine Kapselungsgehäuseanordnung ist beispielsweise aus der Patentschrift CH 694 193 A5 bekannt. Dort ist eine Kapselungsgehäuseanordnung eines gekapselten dreiphasigen Leistungsschalters beschrieben. Die dortige Kapselungsgehäuseanordnung weist einen Kapselungsgehäusegrundkörper mit mehreren Flanschöffnungen auf.

Über die mehreren Flanschöffnungen ist ein Anflanschen von Kapselungsbausteinen an den Kapselungsgehäusegrundkörper vorgesehen. Weiterhin ist über die Flanschöffnungen ein Zugang zum Inneren des Kaspelungsgehäusegrundkörpers möglich.

Der bekannte Kapselungsgehäusegrundkörper ist im Wesentlichen hohlzylindrisch ausgestaltet, wobei Flanschöffnungen sowohl mantelseitig als auch stirnseitig angeordnet sind. Die Flanschöffnungen sind beabstandet zueinander angeordnet und teilweise unterschiedlich ausgerichtet. So wird einerseits ein Zugang in das Innere des Kapselungsgehäusegrundkörpers an einer Vielzahl von Punkten aus mehreren Richtungen ermöglicht, wobei die Dimensionen der Flanschöffnungen begrenzt bleiben. Andererseits ist ein derartig geformter Kapselungsgehäusegrundkörper in der Herstellung aufwändig. Trotz einer Vielzahl von Flanschöffnungen muss die bekannte Kapselungsgehäuseanordnung eine ausreichende mechanische Belastbarkeit aufweisen, um als Druckbehälter verwendet werden zu können. Die Kapselungsgehäuseanordnung weist so zur Erzielung einer ausreichenden Winkelsteifigkeit große Wandstärken auf.

Der WO 91/06996 A1 ist ein Getriebegehäuse entnehmbar, welches drei Öffnungen aufweist, die von Flanschen umgeben sind. Die Öffnungen ermöglichen jeweils den Zugang zu jeweils einem Abschnitt, die durch Zwischenwände voneinander separiert sind. Dadurch soll das Getriebegehäuse versteift werden.

Dem Gebrauchsmuster DE 8 907 711 U1 ist ein druckgasdichtes Gussgehäuse entnehmbar, welches mehrere rohrförmige Teile aufweist, die jeweils einer Aufnahme eines Poles eines Hoch¬spannungsleistungsschalters dienen. Die Teile sind dabei stirnseitig mit Flanschen versehen. Die Flansche sind über angegossene Brücken miteinander verbunden. Ein Zugang zu jedem der rohrförmigen Teile ist jeweils nur über einen einzigen der Flansche ermöglicht.

WO 2010/133464 A1 ist ein elektrischer Leistungsschalter entnehmbar, welcher ein Gehäuse aufweist. Dabei sind mehrere Kammern im Wesentlichen rohrförmig ausgebildet, um jeweils einen Schaltkammerpol aufzunehmen. Die einzelnen Kammern sind zu ihren freien Enden hin offen und mit einem gemeinsamen Deckel verschlossen. Die Innenräume der Deckel ermöglichen eine Gasverbindung der Kammern. Ein Zugang zu den einzelnen Kammern ist auch hier ausschließlich durch die jeweils zugeordnete stirnseitige Öffnung möglich.

Der EP 0 291 762 A2 ist eine metallgekapselte mit Druckgas gefüllte mehrphasige Hochspannungsschaltanlage entnehmbar. Dort sind Gehäuse durch Trennwände in verschiedene Bereiche unterteilt, um beispielsweise Sammelschienen der Phasen L1, L2, L3 positionieren zu können.

Aufgabe der Erfindung ist es daher, eine Kapselungsgehäuseanordnung anzugeben, welche bei verbessertem Zugang zum Inneren derselben und ausreichender Winkelsteifigkeit einen vereinfachten Aufbau aufweist.

Erfindungsgemäß wird die Aufgabe bei einer Kapselungsgehäuseanordnung der eingangs genannten Art dadurch gelöst, dass die Flanschöffnung einen Flanschstutzen abschließt und von einem Stabilisierungselement gequert ist, wobei das Stabilisierungselement in Richtung der Flanschachse beabstandet zum Kapselungsgehäusegrundkörper einen ersten Wandungsabschnitt des Flanschstutzens mit einem zweiten Wandungsabschnitt des Flanschstutzens verbindet.

Eine Elektroenergieübertragungseinrichtung dient einer Übertragung elektrischer Energie. Das heißt, unter Nutzung einer Potentialdifferenz wird ein elektrischer Strom von einem Punkt A zu einem Punkt B getrieben. Dieser elektrische Strom wird in elektrisch zu isolierenden Phasenleitern geführt, welche den Punkt A mit dem Punkt B verbinden. Eine Elektroenergieübertragungseinrichtung dient einer Bereitstellung entsprechender Übertragungswege, insbesondere der nötigen elektrisch isolierten Phasenleiter. Eine Kapselungsgehäuseanordnung kann dabei einen mechanischen Schutz für einen Phasenleiter bieten, welcher in ihrem Inneren angeordnet ist. Weiter kann der Phasenleiter zumindest teilweise beispielsweise von einem elektrisch isolierenden Fluid umgeben sein, welches den Phasenleiter gegenüber der Kapselungsgehäuseanordnung, insbesondere dem Kapselungsgehäusegrundkörper, elektrisch isoliert. Vorteilhafterweise kann das elektrisch isolierende Fluid innerhalb der Kapselungsgehäuseanordnung hermetisch eingeschlossen sein, wobei der Phasenleiter sich zumindest abschnittsweise innerhalb des elektrisch isolierenden Fluids erstreckt. Zur Begrenzung des Fluids kann die Kaselungsgehäuseanordnung, insbesondere der Kapselungsgehäusegrundkörper eine fluiddichte Wandung aufweisen. Gegebenenfalls kann der Phasenleiter eine Wandung durchsetzen, wobei ein Passieren bevorzugt fluiddicht erfolgen sollte, so dass ein im Inneren der Kapselungsgehäuseanordnung angeordnetes Fluid an einem Verflüchtigen gehindert ist. Die Kapselungsgehäuseanordnung kann einen Fluidaufnahmeraum aufweisen. Als Fluide eignen sich beispielsweise Gase oder Flüssigkeiten. Als vorteilhafte Fluide haben sich Schwefelhexafluorid, Stickstoff, Kohlendioxid, Isolieröle, Isolierester sowie Gemische mit diesen Fluiden erwiesen. Vorteilhaft sollte das elektrisch isolierende Fluid zur Verstärkung seiner elektrischen Isolationsfähigkeit unter Überdruck gesetzt werden. In diesem Falle bildet die Kapselungsgehäuseanordnung/der Kapselungsgehäusegrundkörper einen Druckbehälter aus, welcher ein Unterdrucksetzen des Fluides (innerhalb des Fluidaufnahmeraumes) ermöglicht. Die Kapselungsgehäuseanordnung weist dazu entsprechende Wandungen auf, welche eine Barriere zwischen dem Inneren z. B. des Kapselungsgehäusegrundkörpers und dem Äußeren z. B. des Kapselungsgehäusegrundkörpers darstellen. Die Kapselungsgehäuseanordnung widersteht dabei einem Differenzdruck.

Der Kapselungsgehäusegrundkörper kann beispielsweise ein Hohlkörper sein, welcher in seinem Inneren ein Aufnahmeraum (Fluidaufnahmeraum) für das Fluid zur Verfügung stellt. Um einen Zugang zum Fluidaufnahmeraum des Kapselungsgehäusegrundkörpers zu erhalten, kann zumindest eine Flanschöffnung an dem Kapselungsgrundkörper ausgebildet sein. Als Kapselungsgehäusegrundkörper eignen sich beispielsweise im Wesentlichen hohlzylinderförmige Strukturen, die bevorzugt gebrochene Ecken aufweisen, um eine verbesserte Belastbarkeit gegenüber Differenzdrücken zu erzielen. Die hohlzylindrische Struktur kann beispielsweise einen ovalen, kreisrunden, rechteckigen oder anderweitig geeigneten Querschnitt aufweisen.

Eine Flanschöffnung bildet eine Ausnehmung in einer Wandung des Kapselungsgehäusegrundkörpers. Entsprechend ist über die Flanschöffnung ein Zugang zum Inneren, das heißt, insbesondere zu einem Fluidaufnahmeraum des Kapselungsgehäusegrundkörpers ermöglicht. Als solches stellt eine Flanschöffnung in der Struktur des Kapselungsgehäusegrundkörpers eine Unstetigkeitsstelle dar. Insbesondere bei einer Druckbeaufschlagung des Kapselungsgehäusegrundkörpers kann eine derartige Unstetigkeitsstelle eine Schwachstelle in einer Wandung darstellen. Nutzt man nunmehr ein Stabilisierungselement, welches die Flanschöffnung quert, so kann eine Transmission von Kräften durch die Flanschöffnung hindurch zwischen die Flanschöffnung begrenzenden Wandungsabschnitten ermöglicht sein. Entsprechend können auch querschnittgroße Flanschöffnungen in den Kapselungsgehäusegrundkörper eingebracht werden, wobei eine Versteifung des Kapselungsgehäusegrundkörpers durch die Flanschöffnung hindurch erfolgen kann. Über das Verspannelement kann eine Querverbindung zwischen die Flanschöffnung umgebenden Wandungen geschaffen werden. Das Verspannelement sollte eine Verbindung zu einem geringer belastbaren Bereich des Kapselungsgehäusegrundkörpers schaffen, so dass eine Stabilisierung desselben erfolgt und einem Verformen desselben entgegengewirkt ist. Statt der Nutzung mehrerer beabstandet zueinander angeordneter Flanschöffnungen kann das Stabilisierungselement innerhalb der Flanschöffnung liegen. Dadurch wird zwar eine freie Nutzbarkeit der Flanschöffnung eingeschränkt, jedoch kann die Form der Flanschöffnung nunmehr nahezu beliebig ausgestaltet sein. Die Flanschöffnung kann mittels eines Verschlusselementes bevorzugt fluiddicht verschlossen werden. Als Verschlusselement sind beispielsweise Flanschdeckel, Phasenleiterdurchführungen (Durchführungsanordnungen) oder andere zum Verschluss anflanschbare Kapselungsbausteine nutzbar. Bevorzugt kann sich das Stabilisierungselement zumindest teilweise oder vollständig innerhalb des Fluidaufnahmeraumes des Kapselungsgehäusegrundkörpers befinden. Entsprechend ist das Stabilisierungselement zumindest abschnittsweise innerhalb des Fluidaufnahmeraumes angeordnet, wodurch das Stabilisierungselement zumindest abschnittsweise keinem Differenzdruck unterworfen ist. Dadurch ist es möglich, das Stabilisierungselement unabhängig von einer Wandung zur Ausformung einer fluiddichten Barriere des Kapselungsgehäusegrundkörpers auszulegen. Insbesondere die Bereiche, an welchen das Stabilisierungselement an einen Wandungsabschnitt angeschlagen ist, sollten innerhalb des Fluidaufnahmeraumes liegen. Entsprechend können verschiedenartig geformte Stabilisierungselemente zur Querung der Flanschöffnung genutzt werden und Kräfte zwischen den die Flanschöffnung begrenzenden Wandungsabschnitten übertragen. Als Stabilisierungselemente können beispielsweise Verspannstangen, Bolzen, Zugseile, Streben, Stützelemente usw. Verwendung finden.

Das Stabilisierungselement kann dabei als diskretes Element in den Kapselungsgehäusegrundkörper eingesetzt sein. Es kann jedoch auch vorgesehen sein, dass das Stabilisierungselement integraler Bestandteil des Kapselungsgehäusegrundkörpers ist. Eine Ausbildung als Teil des Kapselungsgehäusegrundkörpers kann beispielsweise durch eine Anformung bzw. Einformung des Stabilisierungselementes in den Kapselungsgehäusegrundkörper erfolgen. Vorteilhaft hat sich erwiesen, das Stabilisierungselement beispielsweise im Rahmen eines Gussverfahrens gemeinsam mit dem Kapselungsgehäusegrundkörper auszuformen, so dass insbesondere eine einstückige Ausgestaltung von Kapselungsgehäusegrundkörper und Stabilisierungselement erfolgt. Beispielsweise kann der Kapselungsgehäusegrundkörper zumindest teilweise metallisch ausgeführt sein, insbesondere in Form eines gegossenen metallischen Körpers, wobei sich Nichteisenmetalle wie Aluminium und Aluminiumlegierungen bewährt haben. Der Kapselungsgehäusegrundkörper sollte dabei fluiddichte Wandungen zur Verfügung stellen. Zumindest die Flanschöffnung sowie die Flanschöffnung begrenzende Wandungen sollten dabei einstückig aus einem metallischen Material ausgeformt sein. Ein Stabilisierungselement ragt dabei in die Flanschöffnung hinein, wobei das Stabilisierungselement sich bevorzugt (auch) innerhalb des Fluidaufnahmeraumes des Kapselungsgehäusegrundkörpers erstreckt.

Eine weitere Ausgestaltung sieht vor, dass die Flanschöffnung einen Flanschstutzen abschließt, wobei das Stabilisierungselement einen ersten Wandungsabschnitt des Flanschstutzens mit einem zweiten Wandungsabschnitt des Flanschstutzens verbindet.

Durch die Nutzung eines Flanschstutzens ist es möglich, in einer Wandung des Kapselungsgehäusegrundkörpers eine Schnittstelle über die Flanschöffnung zu bilden, mittels welcher weitere Kapselungsbausteine mit dem Kapselungsgehäusegrundkörper verflanscht werden können. Dabei weist der Flanschstutzen eine Wandung auf, die in mehrere Wandungsabschnitte unterteilbar ist, wobei das Stabilisierungselement von einem ersten Wandungsabschnitt zu einem Wandungsabschnitt verläuft. Somit ist es möglich, über das Stabilisierungselement die Flanschöffnung zu unterteilen, wobei die verbundenen Wandungsabschnitte jeweils zu einem sowie zu dem anderen Teil der unterteilten Flanschöffnung zugehörig sind. Über einen Flanschstutzen ist es besonders vorteilhaft möglich, eine flächenhaft ausgebildete Wandung des Kapselungsgehäusegrundkörpers aufzubrechen und eine Schnittstelle am Kapselungsgehäusegrundkörper zur Verfügung zu stellen. Ein Flanschstutzen weist eine Wandung auf, welche die Achse, zu welcher die Flanschöffnung im Wesentlichen quer verläuft, mantelartig umgreift. Eine Wandung eines Flanschstutzens ist beispielsweise im Wesentlichen hohlzylindrisch ausgeformt und weist stirnseitig die Flanschöffnung auf. Die hohlzylindrische Form kann z. B. eine im Wesentlichen kreisförmige, ovale, runde, rechteckige, mehreckige usw. Stirnfläche aufweisen. Dabei kann der Querschnitt des Flanschstutzens von dem Querschnitt der Flanschöffnung abweichen. Der Flanschstutzen kann ein Flanschblatt tragen, welches die Form der Flanschöffnung definiert. Das Flanschblatt kann einem Anschluss von weiteren Kapselungsbausteinen dienen. Dieser Anschluss kann beispielsweise fluiddicht erfolgen. Die Flanschöffnung sollte sich bevorzugt im Wesentlichen quer zur Flanschachse (Hohlzylinderachse) erstrecken. Die Wandung des Flanschstutzens bildet die mantelseitige Begrenzung des Flanschstutzens. Beispielsweise kann ein Flanschstutzen sich mantelseitig aus einem im Wesentlichen zylindrischen Kapselungsgehäusegrundkörper erheben. Es kann jedoch auch vorgesehen sein, dass beispielsweise eine stirnseitige Anordnung eines Flanschstutzens an einem zylindrisch ausgeformten Kapselungsgehäusegrundkörper erfolgt. Durch die Verwendung eines Flanschstutzens besteht weiterhin die Möglichkeit verschiedenartig dimensionierte Flanschöffnungen auszuformen, welche verschiedenartig ausgerichtet an dem Kapselungsgehäusegrundkörper angeordnet sein können. Ein Flanschstutzen weist ein freies Ende auf, welches die Flanschöffnung begrenzt. Weiter weist ein Flanschstutzen eine Basis auf, welche sich an eine Wandung des Kapselungsgehäusegrundkörpers anschließt/in diese übergeht. Ein Stabilisierungselement kann auch einen Teil einer Wandung eines Flanschstutzens bilden.

Eine weiter vorteilhafte Ausgestaltung kann vorsehen, dass das Stabilisierungselement die Flanschöffnung in einen ersten Öffnungsbereich und einen zweiten Öffnungsbereich unterteilt.

Ein erster sowie zweiter Öffnungsbereich ergänzen einander zur Flanschöffnung (gegebenenfalls unter Nutzung weiterer Öffnungsbereiche), wobei eine Unterteilung in die beiden Öffnungsbereiche über ein dazwischenliegendes Stabilisierungselement gegeben ist. Dabei kann je nach Ausführung des Stabilisierungselementes die Flanschöffnung in ihrem frei zugänglichen Querschnitt mehr oder weniger stark eingeschränkt sein. Die sich ergebenden Öffnungsbereiche können begrenzt durch das Stabilisierungselement abweichende Formen aufweisen.

Weiterhin kann vorteilhaft vorgesehen sein, dass das Stabilisierungselement ein Flanschblatt zumindest teilweise trägt.

Die Flanschöffnung kann von einem Flanschblatt begrenzt sein, an welchem beispielsweise ein weiterer Kapselungsbaustein anzuflanschen ist. Das Flanschblatt kann beispielsweise nach Art eines Schraubflansches, nach Art eines Schweißflansches, nach Art eines Klebeflansches usw. ausgeführt sein. Das Flanschblatt selbst kann dabei zumindest teilweise von dem Stabilisierungselement getragen sein. So ist die Möglichkeit gegeben, das Flanschblatt über das Stabilisierungselement, welches einerseits die Flanschöffnung quert, andererseits auch das Flanschblatt abstützt, zu versteifen. Beispielsweise kann das Flanschblatt auf dem Stabilisierungselement aufsitzend verlaufen, so dass der von dem Stabilisierungselement getragene Teil eines Flanschblattes beispielsweise auch in die Flanschöffnung hineinragt und die Flanschöffnung z. B. tailliert. So besteht die Möglichkeit der Ausbildung von verwindungssteifen Flanschblättern, welche beispielsweise auch ausbauchend oder sickenartig einziehend ausgeformt sein können.

Eine weiter vorteilhafte Ausgestaltung kann vorsehen, dass das Flanschblatt einen ersten Anlagebereich und einen zweiten Anlagebereich aufweist.

Ein Flanschblatt kann einen ersten sowie einen zweiten Anlagebereich aufweisen. Damit besteht die Möglichkeit, die Flanschöffnung unter Nutzung mehrerer Verschlusselemente/Kapselungsbausteine zu verschließen, wobei der erste Anlagebereich beispielsweise von einem ersten Verschlusselement und der zweite Anlagebereich beispielsweise von einem zweiten Verschlusselement verschlossen ist. Dies bietet hinsichtlich einer modularen Ausgestaltung von Kapselungsgehäuseanordnungen Vorteile. Darüber hinaus ergeben sich auch Montagevorteile, da durch die Verwendung von mehreren Verschlusselementen masseärmere Baugruppen entstehen. Insbesondere bei einer Montage unter Baustellenbedingungen kann eine Montage unter Verzicht auf Spezialwerkzeuge erfolgen. Es kann vorgesehen sein, dass die Anlagebereiche unabhängig voneinander ein teilweises Verschließen der Flanschöffnung ermöglichen. Die Anlagebereiche und/oder die Verschlusselemente können aneinander insbesondere formkomplementär grenzen.

Eine weitere vorteilhafte Ausgestaltung kann vorsehen, dass der erste Anlagebereich den ersten Öffnungsbereich und der zweite Anlagebereich den zweiten Öffnungsbereich begrenzt.

Ein erster Öffnungsbereich und ein zweiter Öffnungsbereich können von dem ersten Anlagebereich bzw. dem zweiten Anlagebereich zumindest teilweise begrenzt sein. So kann der erste Anlagebereich den ersten Öffnungsbereich umgrenzen und der zweite Anlagebereich kann den zweiten Öffnungsbereich umgrenzen. Die beiden Anlagebereiche können zumindest teilweise gemeinsam am Stabilisierungselement abgestützt sein. So ist es beispielsweise möglich, dass die beiden Anlagebereiche getragen von dem Stabilisierungselement aneinanderstoßen und so einen ersten Öffnungsbereich sowie einen zweiten Öffnungsbereich jeweils individuell begrenzen. Die beiden Öffnungsbereiche können vorteilhaft im Bereich des Stabilisierungselementes aneinander grenzen.

Eine weiter vorteilhafte Ausgestaltung kann vorsehen, dass die Anlagebereiche unabhängig voneinander verflanscht werden können.

Ein Verflanschen der beiden Anlagebereiche unabhängig voneinander gestattet es, beispielsweise während einer Montage beispielsweise zu Reparaturzwecken die Flanschöffnung lediglich teilweise zu öffnen und nur das notwendige Verschlusselement zu lösen. Dies bietet insbesondere im Reparaturfall den Vorteil, dass auch unter beengten Verhältnissen eine Flanschöffnung geöffnet und verschlossen werden kann. Insbesondere ist es möglich, die zum Verschließen der Anlagebereiche jeweils individuell vorgesehenen Verschlusselemente nacheinander zu handhaben und so ein verbessertes Montage- bzw. Reparaturkonzept verfolgen zu können.

Eine weitere vorteilhafte Ausgestaltung kann vorsehen, dass das Stabilisierungselement einen Lagerpunkt für einen Phasenleiter, insbesondere einer elektrischen Schalteinrichtung aufweist.

Es kann vorgesehen sein, dass ein zur Übertragung des elektrischen Stromes vorgesehener Phasenleiter beispielsweise im Innern (z. B. im Fluidaufnahmeraum) des Kapselungsgehäusegrundkörpers auch geschaltet wird. Entsprechende Schalteinrichtungen, welche eine Trennstrecke in einem Phasenleiter herstellen bzw. eine Trennstrecke in einem Phasenleiter schließen oder dazu dienen, eine Potentialbeaufschlagung eines Phasenleiters , z. B. mit Erdpotential zu erzielen, können innerhalb des Fluidaufnahmeraumes des Kapselungsgehäusegrundkörpers positioniert sein. Um eine raumsparende Struktur zu erzeugen, kann das Stabilisierungselement genutzt sein, um eine Lagerung bzw. Stützung eines Phasenleiters und/oder einer elektrischen Schalteinrichtung zumindest teilweise zu übernehmen. Insbesondere bei einer Anordnung einer Flanschöffnung an einem Flanschstutzen kann sich das Stabilisierungselement in den Flanschstutzen hinein erstrecken, so dass der Flanschstutzen zur zumindest teilweisen Aufnahme einer elektrischen Schalteinrichtung vorgesehen sein kann.

Eine weitere vorteilhafte Ausgestaltung kann vorsehen, dass die Flanschöffnung eine sickenartig eingekerbte, insbesondere eine taillierte Kontur aufweist.

Eine eingekerbte bzw. taillierte Kontur ermöglicht es, bei flächenvergrößerten Flanschöffnungen deren Stabilität zu verbessern. Insbesondere kann im Bereich einer Einkerbung/Taillierung ein Anschlagpunkt für ein Stabilisierungselement vorgesehen sein, so dass Kräfte möglichst breit in den Kapselungsgehäusegrundkörper bzw. in die eine Flanschöffnung begrenzende Wandung (z B. eines Flanschstutzens) eingeleitet werden können. So ist es beispielsweise möglich, Kräfte möglichst breit verteilt in eine Wandung des Kapselungsgehäusegrundkörpers einzuleiten, wobei innerhalb des Stabilisierungselementes eine Fokussierung und Bündelung von Kraftflüssen erfolgen kann. Dabei kann eine Stabilisierungswirkung auf große Flächen einer Wandung des Kapselungsgehäusegrundkörpers erzielt werden, wobei das Stabilisierungselement selbst querschnittreduziert ausgeführt sein kann. Dies hat den Vorteil, dass die Flanschöffnung durch das Stabilisierungselement nur im begrenzten Maße in ihrem Querschnitt eingeengt ist. Eine Taillierung der Flanschöffnung wird beispielsweise erzielt, indem an gegenüberliegenden Seiten eine sickenartige Einkerbung der die Flanschöffnung begrenzenden Wandung erfolgt. Dadurch wird zum einen die Wandung selbst stabilisiert, da entsprechende Sicken entstehen, zum Anderen können in diesen eingesickten Bereichen Kräfte besonders vorteilhaft flächenartig von dem Stabilisierungselement in die Wandung übergeleitet werden.

Eine weiter vorteilhafte Ausgestaltung kann vorsehen, dass ein die Flanschöffnung begrenzendes Flanschblatt die Form einer Acht aufweist.

Ein Flanschblatt in Form einer Acht ermöglicht es, beispielsweise einen ersten sowie einen zweiten Öffnungsbereich an der Flanschöffnung vorzusehen und dabei die beiden Öffnungsbereiche mit unterschiedlichen Verschlusselementen zu verschließen. Das Flanschblatt ist so in einen ersten sowie in einen zweiten Anlagebereich unterteilt, wobei der erster bzw. der zweite Anlagebereich aneinanderstoßen. Der Bereich eines Querriegels in der Acht-Form des Flanschblattes kann beispielsweise durch den Verlauf eines Stabilisierungselementes definiert werden, wobei das Stabilisierungselement selbst im Bereich des Querriegels das Flanschblatt stabilisieren sowie versteifen kann. Dabei kann vorgesehen sein, dass die Öffnungsbereiche voneinander abweichende Konturen aufweisen. Dadurch kann eine zusätzliche Stabilisierung der Kapselungsgehäuseanordnung erzielt werden.

Weiter kann vorteilhaft vorgesehen sein, dass das Stabilisierungselement eine Trennwandung ist.

Bei einer Ausgestaltung des Stabilisierungselementes als Trennwandung ist die Möglichkeit gegeben, eine flächenartige Stabilisierung und ein flächenartiges Anbinden des Stabilisierungselementes zu erzielen und dabei die Flanschöffnung lediglich in einem begrenzten Maße in ihrem Querschnitt zu reduzieren. Die Trennwandung kann beispielsweise plattenartig ausgeführt sein, wobei Wandflächen im Wesentlichen quer zur Flanschöffnung ausgerichtet sein sollten, so dass einerseits ein winkelstarres Stabilisierungselement gegeben ist, welches die Flanschöffnung jedoch nur geringfügig in ihrem Queschnitt reduziert. Insbesondere bei der Nutzung eines Flanschstutzens kann die Trennwandung sich quer durch den Flanschstutzen erstrecken.

Eine weitere vorteilhafte Ausgestaltung kann vorsehen, dass die Flanschöffnung von einer ersten und einer zweiten Phasenleiterdurchführung verschließbar ist.

Die Flanschöffnung kann zur Erzielung eines abgeschlossenen Kapselungsgehäusegrundkörpers verschlossen werden. Insbesondere kann vorgesehen sein, dass der Kapselungsgehäusegrundkörper eine fluiddichte Ausgestaltung erfährt, so dass ein Verschluss der Flanschöffnung in fluiddichter Art und Weise erfolgen sollte. Dabei kann vorgesehen sein, dass eine erste sowie eine zweite Phasenleiterdurchführung eingesetzt sind, um die Flanschöffnung zu verschließen. Dabei kann die erste Phasenleiterdurchführung den ersten Öffnungsbereich der Flanschöffnung und die zweite Phasenleiterdurchführung den zweiten Öffnungsbereich der Flanschöffnung verschließen. Dadurch ist es möglich, über die Phasenleiterdurchführungen Phasenleiter elektrisch isoliert in das Innere des Kapselungsgehäusegrundkörpers einzuführen bzw. aus dem Inneren des Kapselungsgehäusegrundkörpers herauszuführen, um innerhalb des Kapselungsgehäusegrundkörpers (z. B. in einem Fluidaufnahmeraum) beispielsweise ein Schalten oder Trennen oder Erden eines Phasenleiters vorzunehmen.

Dabei kann insbesondere vorgesehen sein, dass innerhalb des Kapselungsgehäusegrundkörpers ein Fluidaufnahmeraum angeordnet ist, innerhalb welchem z. B. eine Unterbrechereinheit eines Leistungsschalters angeordnet ist, welche einem Unterbrechen eines elektrischen Stromes, welcher durch einen Phasenleiter fließen kann, dient. Weiter kann z. B. ein Trennschalter eingesetzt sein, der ein Auftrennen eines Phasenleiters ermöglicht. Es kann auch z. B. ein Erdungsschalter eingesetzt sein, welcher einem Erden eines Phasenleiters dienen kann. Gegebenenfalls kann z. B. auch ein Kombinationsschalter, beispielsweise ein so genannter Dreistellungsschalter, verwendet werden, welcher beispielsweise einem zeitlich aufeinanderfolgenden Trennen und Erden eines Phasenleiters dienen kann. Das im Inneren des Fluidaufnahmeraumes angeordnete elektrisch isolierende Fluid kann dabei einem elektrischen Isolieren des Phasenleiters dienen. Zusätzlich oder alternativ kann jedoch auch vorgesehen sein, dass das elektrisch isolierende Fluid einer Lichtbogenlöschung bzw. einer Lichtbogenbeblasung dient, um beispielsweise im Falle eines auftretenden Ausschaltlichtbogens ein Wiederzünden desselben zu verhindern.

Im Folgenden wird ein Ausführungsbeispiel der Erfindung schematisch in einer Zeichnung gezeigt und nachfolgend näher beschrieben. Dabei zeigt die
- Fig. 1: eine perspektivische Ansicht eines Kapselungsgehäusegrundkörpers einer Kapselungsgehäuseanordnung und die
- Fig. 2: einen Schnitt durch den Kapselungsgehäusegrundkörper wie aus der Fig. 1 bekannt.

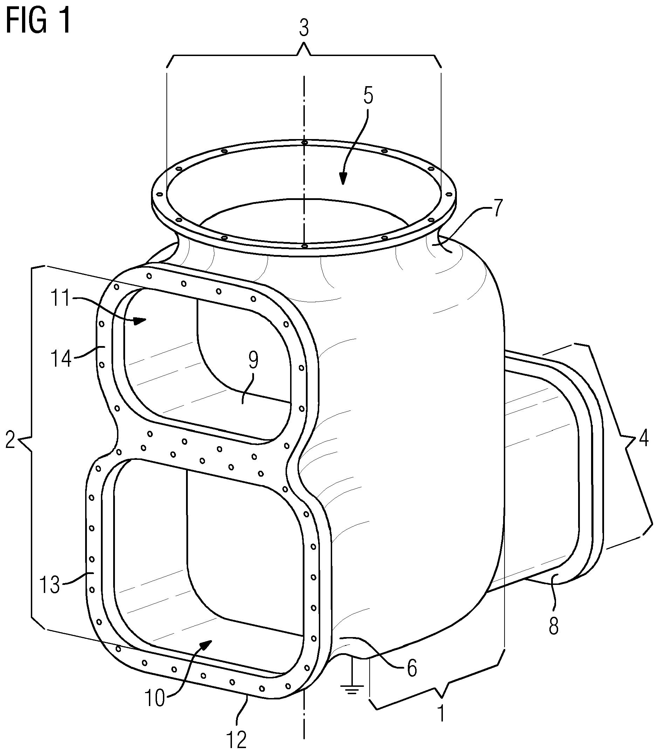

Die Kapselungsgehäuseanordnung nach Figur 1 weist einen Kapselungsgehäusegrundkörper 1 auf. Der Kapselungsgehäusegrundkörper 1 ist im Wesentlichen als hohlzylindrische Struktur ausgebildet, hier mit einem im Wesentlichen rechteckigen Querschnitt. Zur Erhöhung der mechanischen Stabilität ist der Kapselungsgehäusegrundkörper 1 an seinen Kanten abgerundet gebrochen, so dass Kräfte zwischen Mantelflächen sowie Stirnflächen verbessert umgelenkt und fortgeleitet werden können. Alternativ kann der Kapselungsgehäusegrundkörper beispielsweise auch als Hohlzylinder mit einem im Wesentlichen kreisförmigen oder elliptischen Querschnitt ausgeführt sein. Vorliegend ist der Kapselungsgehäusegrundkörper 1 als metallischer Kapselungsgehäusegrundkörper 1 ausgebildet. Der Kapselungsgehäusegrundkörper 1 führt Erdpotential. Vorteilhaft kann der Kapselungsgehäusegrundkörper 1 mittels eines Gussverfahrens hergestellt sein. Zur Ausbildung des Kapselungsgehäusegrundkörpers 1 eignen sich insbesondere Nichteisenmetalle wie Aluminium, welche eine hohe Steifigkeit bei geringer Masse aufweisen.

Vorliegend weist der Kapselungsgehäusegrundkörper 1 eine erste Flanschöffnung 2, eine zweite Flanschöffnung 3 sowie eine dritte Flanschöffnung 4 auf. Die Flanschöffnungen 2, 3, 4 weisen jeweils voneinander abweichende Querschnitte auf. So ist beispielsweise vorgesehen, dass die zweite Flanschöffnung 3 einen im Wesentlichen kreisförmigen Querschnitt aufweist, wohingegen die dritte Flanschöffnung 4 einen im Wesentlichen rechteckigen Querschnitt aufweist. Die erste Flanschöffnung 2 weist ebenfalls einen im Wesentlichen rechteckigen Querschnitt auf, wobei dieser Querschnitt mit einer Stufung bzw. Taillierung versehen ist. Die Flanschöffnungen 2, 3, 4 sind jeweils als Schraubflansche mit entsprechenden Flanschblättern ausgestattet, so dass an den jeweiligen Flanschblättern gegengleiche Kapselungsbausteine wie Verschlusselemente, z. B. Flanschdeckel, befestigbar sind. Dabei ist vorgesehen, dass die Flanschöffnungen 2, 3, 4 jeweils fluiddicht verschlossen werden können, so dass ein im Inneren des Kapselungsgehäusegrundkörpers 1 befindlicher Fluidaufnahmeraum 5 fluiddicht verschlossen werden kann. Der Fluidaufnahmeraum 5 ist durch Wandungen des Kapselungsgehäusegrundkörpers 1 begrenzt. Weiter ist der Fluidaufnahmeraum 5 auch von einem ersten Flanschstutzen 6, einem zweiten Flanschstutzen 7 sowie einem dritten Flanschstutzen 8 des Kapselungsgehäusegrundkörpers 1 begrenzt. Die Flanschstutzen 6, 7, 8 entsprechen im Wesentlichen in ihrer Formgebung den jeweils zugeordneten Flanschöffnungen 2, 3, 4. So ist der zweite Flanschstutzen 7 der zweiten Flanschöffnung 3 entsprechend im Wesentlichen mit einem kreisförmigen Querschnitt versehen. Der dritte Flanschstutzen 8 ist entsprechend der dritten Flanschöffnung 4 mit einem im Wesentlichen rechteckigen Querschnitt ausgestattet. Folglich ist der erste Flanschstutzen 6, welcher von der ersten Flanschöffnung 3 abgeschlossen ist, mit einer im Wesentlichen rechteckigen Form versehen, wobei zur Ausbildung eines mechanisch stabileren ersten Flanschstutzens 6 eine Taillierung desselben erfolgt ist. Die Flanschstutzen 6, 7, 8 sind jeweils mantelseitig (erster Flanschstutzen 6, dritter Flanschstutzen 8) beziehungsweise stirnseitig (zweiter Flanschstutzen 7) an dem Kapselungsgehäusegrundkörper 1 angeordnet. Vorliegend sind die Flanschstutzen 6, 7, 8 einstückig mit dem Kapselungsgehäusegrundkörper 1 in einem Gussverfahren ausgeformt worden. Es kann jedoch auch vorgesehen sein, dass die Flanschstutzen 6, 7, 8 nachträglich mit einem Kapselungsgehäusegrundkörper 1 verbunden werden. Dabei sollten die Flanschstutzen 6, 7, 8 sowie der Kapselungsgehäusegrundkörper 1 bevorzugt miteinander fluiddicht verbunden sein.

Im Folgenden soll insbesondere die Ausgestaltung der ersten Flanschöffnung 2 sowie des ersten Flanschstutzens 6 näher beschrieben werden. Der erste Flanschstutzen 6 weist eine im Wesentlichen rechteckige Struktur auf, wobei der erste Flanschstutzen 6 eine Taillierung aufweist. Im Bereich der Taillierung ist ein Stabilisierungselement 9 angeordnet. Das Stabilisierungselement 9 quert die erste Flanschöffnung 2 und unterteilt die erste Flanschöffnung 6 in einen ersten Öffnungsbereich 10 sowie einen zweiten Öffnungsbereich 11. Die beiden Öffnungsbereiche 10, 11 weisen einander ähnelnde Querschnitte auf, jedoch sind die Öffnungsbereiche 10, 11 mit voneinander abweichenden Querschnittsflächen versehen. Die beiden Öffnungsbereiche 10, 11 weisen jeweils einen im Wesentlichen rechteckigen Querschnitt auf. Dabei sind deren Ecken zur Erzielung einer druckfesten Struktur abgerundet gebrochen ausgeführt. Das Stabilisierungselement 9 ist vorliegend in Form einer Trennwandung ausgebildet, wobei die Trennwandung eine messerartige bzw. plattenartige Form aufweist. Die Trennwandung verläuft dabei in Richtung der ersten Flanschöffnung 2, so dass deren Wandflächen fluchtend in Öffnungsrichtung der ersten Flanschöffnung 2 liegen. Somit wird einerseits ein verwindungssteifes Stabilisierungselement 9 geschaffen, welches jedoch die nutzbare Querschnittsfläche der ersten Flanschöffnung 2 nur in geringem Maße reduziert.

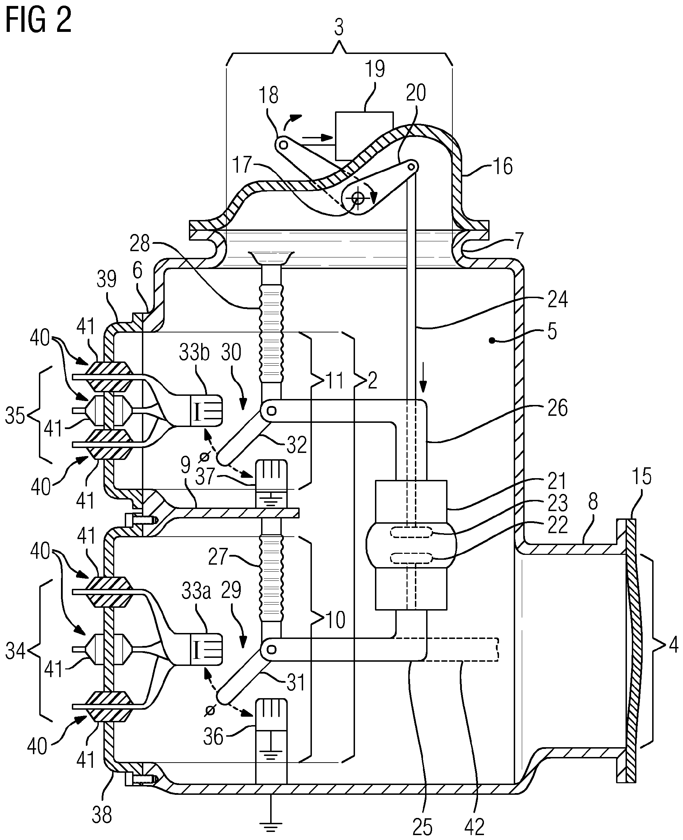

Die erste Flanschöffnung 2 ist mit einem Flanschblatt 12 ausgestattet. Das Flanschblatt 12 umgreift die erste Flanschöffnung 2, wobei das Flanschblatt 12 von dem ersten Flanschstutzen 6 getragen ist. Zusätzlich ist das Flanschblatt 12 auch an dem Stabilisierungselement 9 abgestützt, wobei das Flanschblatt 12 die erste Flanschöffnung 2 auch quert. Dabei ist die Lage des Stabilisierungselements 9 derart gewählt, dass dieses im Bereich der Taillierung der ersten Flanschöffnung 2 in die Wandung des ersten Flanschstutzens 6 übergeht und sich an diese anschließt. Dadurch verläuft das Stabilisierungselement 9 von einem ersten Wandungsabschnitt des ersten Flanschstutzens 6 zu einem zweiten Wandungsabschnitt des ersten Flanschstutzens 6. Das Stabilisierungselement 9 trägt dabei Teile des Flanschblattes 12. Durch den Bereich des Flanschblattes 12, welcher an dem Stabilisierungselement 9 abgestützt ist, ist das Flanschblatt 12 in einen ersten Anlagebereich und einen zweiten Anlagebereich 13, 14 unterteilt. So umschließt das Flanschblatt 12 die erste Flanschöffnung 2 und quert die erste Flanschöffnung 2, um einen ersten und einen zweiten Anlagebereich 13, 14 auszubilden. Durch eine Unterteilung in einen ersten Anlagebereich 13 sowie einen zweiten Anlagebereich 14 ist die Möglichkeit gegeben, die erste Flanschöffnung 2 mittels voneinander unabhängiger Verschlusselemente (vgl. z. B. Fig. 2, Bezugszeichen 38, 39) zu verschließen. Damit können großflächige Flanschöffnungen 2 in vereinfachter Weise mit massereduzierten Verschlusselementen verschlossen werden. Dies ist insbesondere im Montage- sowie Reparaturfall von Vorteil. Der erste Anlagebereich 13 sowie der zweite Anlagebereich 14 des Flanschblattes 12 der ersten Flanschöffnung 2 sind dabei unabhängig voneinander mit weiteren Kapselungsbausteinen verbindbar. Der erste Anlagebereich 13 umschließt den ersten Öffnungsbereich 10 der ersten Flanschöffnung 2. Der zweite Anlagebereich 14 umschließt den zweiten Öffnungsbereich 11 der ersten Flanschöffnung 2. Die beiden Anlagebereich 13, 14 stoßen im Bereich des Flanschblattes 12 aneinander, welcher von dem Stabilisierungselement 9 getragen ist. Vorteilhaft ist vorgesehen, dass das Flanschblatt 12 nach Art eines Schraubflansches ausgeführt wird, so dass Verschlusselemente, welche an dem Flanschblatt 12 zur Anlage gebracht und mit diesem verbunden werden sollen, unter Verwendung von Bolzen reversibel mit dem Flanschblatt 12 und damit mit dem Kapselungsgehäusegrundkörper 1 verbindbar sind. Vorliegend ist die Wahl auf sacklochartige Gewindebohrungen gefallen, welche in dem Flanschblatt 12 münden, so dass mittels Gewindebolzen ein Verbolzen von Verschlusselementen an dem Flanschblatt 12 erfolgen kann. Dabei kann vorgesehen sein, über das Flanschblatt 12 ein fluiddichter Verschluss der ersten Flanschöffnung 2 erfolgt. Durch die Taillierung des Flanschblattes 12 sowie dessen Querverbindung zur Ausbildung eines ersten Anlagebereichs 13 sowie eines zweiten Anlagebereichs 14 weist das Flanschblatt 12 die Form einer Acht auf. D. h. zwei in sich geschlossene Bahnen des ersten Anlagebereichs 13 sowie des zweiten Anlagebereichs 14 stoßen aneinander und verschmelzen in dem Bereich des Aneinanderstoßens. Die aneinander stoßenden Abschnitte der beiden Anlagebereiche 13, 14 sind von dem Stabilisierungselement 9 gestützt.

Die Figur 2 zeigt die aus der Figur 1 bekannte Kapselungsgehäuseanordnung im Schnitt. Beispielhaft ist eine Ausrüstung des Kapselungsgehäusegrundkörpers 1 mit weiteren Elementen gezeigt.

Die dritte Flanschöffnung 4 ist mit einem Blinddeckel 15 fluiddicht verschlossen. Die zweite Flanschöffnung 11 ist mittels eines Getriebedeckels 16 fluiddicht verschlossen. Der Getriebedeckel 16 ist von einer drehbaren Welle 17 fluiddicht durchsetzt und ermöglicht eine Übertragung einer Drehbewegung in den Fluidaufnahmeraum 5. An der drehbaren Welle 17 ist außerhalb des Fluidaufnahmeraumes 5 ein erster Umlenkhebel 18 angeordnet. Der erste Umlenkhebel 18 ist mit einer Antriebseinrichtung 19 verbunden, welche eine Antriebsbewegung über den ersten Antriebshebel 18 auf die drehbare Welle 17 übertragen kann. Innerhalb des Fluidaufnahmeraumes 5 ist an der drehbaren Welle 17 ein zweiter Antriebshebel 20 angeordnet. Mittels des zweiten Antriebshebels 20 kann eine Drehbewegung der drehbaren Welle 17 in eine Linearbewegung gewandelt werden.

Innerhalb des Fluidaufnahmeraumes 5 ist eine Leistungsschaltstelle in Form einer Vakuumröhre 21 angeordnet. In der Darstellung der Figur 2 ist lediglich eine Vakuumröhre 21 erkennbar. Eine zweite sowie eine dritte Vakuumröhre 21 baugleichen Typs sind fluchtend zu einer Lotrechten der Zeichenebene der Figur 1 ausgerichtet und folglich in der Schnittdarstellung nicht erkennbar. Entsprechend handelt es sich bei der in Figur 2 dargestellten Kapselungsgehäuseanordnung um eine mehrphasig gekapselte Anordnung. Innerhalb des Fluidaufnahmeraumes 5 sind mehrere Phasenleiter elektrisch isoliert voneinander angeordnet, so dass ein mehrphasiges Spannungssystem (z. B. 3-phasiges Wechselspannungssystem) übertragen werden kann. Die Vakuumröhre 21 weist ein feststehendes Kontaktstück 22 sowie ein bewegbares Kontaktstück 23 auf. Das bewegbare Kontaktstück 23 ist über eine Antriebsstange 24 mit dem zweiten Antriebshebel 20 verbunden, so dass eine Drehbewegung der drehbaren Welle 17 in eine lineare Relativbewegung der beiden Kontaktstücke 22, 23 der Vakuumschaltröhre 21 übertragen werden kann. Bevorzugt ist die Antriebsstange 24 elektrisch isolierend ausgeführt, so dass eine Potentialtrennung zu dem zweiten Antriebshebel 20 beziehungsweise der drehbaren Welle 17 gegeben ist.

Das feststehende Kontaktstück 22 ist mit einer Zuleitung 25 elektrisch leitend verbunden. Das bewegbare Kontaktstück 23 ist mit einer Ableitung 26 elektrisch leitend verbunden. Analog zur Ausgestaltung der Vakuumschaltröhre 21 sind auch hier wiederum drei Zuleitungen 25 sowie drei Ableitungen 26 fluchtend hintereinander angeordnet, wobei lediglich eine Zuleitung 25 sowie eine Ableitung 26 in der Zeichenebene der Figur 2 dargestellt sind. Die Zuleitung 25 ist über einen ersten Stützisolator 27 mechanisch gehalten und positioniert. Die Ableitung 26 ist über einen zweiten Stützisolator 28 mechanisch gehalten und positioniert. Die beiden Stützisolatoren 27, 28 sind an der Kapselungsgehäuseanordnung abgestützt. Dabei ist der erste Stützisolator 27 an dem Stabilisierungselement 9 angeschlagen. Der zweite Stützisolator 28 ist an einem Anguss im Bereich des zweiten Flanschstutzens 7 angeschlagen. Über die Stützisolatoren 27, 28 ist die Zuleitung 25 beziehungsweise die Ableitung 26 mechanisch stabilisiert und positioniert. Weiterhin ist über die Zuleitung 25 beziehungsweise die Ableitung 26 auch eine Positionierung und Lagefixierung der Vakuumröhre 21 vorgenommen. In der Zuleitung 25 sowie der Ableitung 26 sind ein erster Trennschalter 29 sowie ein zweiter Trennschalter 30 angeordnet. Auch hier sind fluchtend hinter den in der Figur 2 ersichtlichen Trennschaltern 29, 30 jeweils zwei weitere erste und zweite Trennschalter 29, 30 angeordnet. Die Trennschalter 29, 30 weisen jeweils ein schwenkbares Trennmesser 31, 32 auf. Die Trennmesser 31, 32 sind drehbar an der Zuleitung 25 beziehungsweise der Ableitung 26 gelagert und elektrisch leitend mit diesen kontaktiert. Im Bereich der Drehpunkte der Trennmesser 31, 32 erfolgt eine Abstützung über den jeweiligen Stützisolator 27, 28. Dadurch ist ein winkelstarres stabilisiertes System von Phasenleitern 25, 26 im Inneren des Fluidaufnahmeraumes 5 gegeben. Die Trennmesser 31, 32 sind derart ausgelegt, dass diese jeweils mit einem ortsfesten Trennkontakt 33a, 33b in Kontakt treten können, so dass die Zuleitung 25 beziehungsweise die Ableitung 26 mit Durchführungsanordnungen 34, 35 elektrisch kontaktierbar sind. Weiterhin sind Erderkontakte 36, 37 vorgesehen, welche jeweils mit einem der Trennmesser 31, 32 elektrisch kontaktierbar sind und wodurch die Zuleitung 25 beziehungsweise die Ableitung 26 mit Erdpotential beaufschlagbar sind. Analog zur dreiphasigen Ausgestaltung von Zu- und Ableitung 25, 26 sowie Vakuumschaltröhre 21 sind auch die Trennschalter 29, 30 nebst Erderkontakten 36, 37 dreifach ausgeführt, wobei aufgrund der Lage der Zeichenebene der Figur 2 jeweils nur ein Element sichtbar ist. Die Erderkontakte 36, 37 sind am ersten Flanschstutzen 6 beziehungsweise am Stabilisierungselement 9 gelagert und zur Potentialübertragung mit diesen elektrisch kontaktiert. Über den ersten Stützisolator 27 ist eine Abstützung des ersten Trennschalters 29 an dem Stabilisierungselement 9 (und damit am Kapselungsgehäusegrundkörper 1) vorgenommen. Weiterhin ist über die Zuleitung 25 auch eine zumindest teilweise Abstützung der Vakuumschaltröhre 21 am Stabilisierungselement 9 (und damit am Kapselungsgehäusegrundkörper 1) gegeben. Über den zweiten Stützisolator 28 ist eine Abstützung des zweiten Trennschalters 30 an dem Kapselungsgehäusegrundkörper 1 vorgenommen. Weiterhin ist über die Ableitung 26 auch eine zumindest teilweise Abstützung der Vakuumschaltröhre 21 am Kapselungsgehäusegrundkörper 1 gegeben.

Die ortsfesten Trennkontakte 33a, 33b sind über die Durchführungsanordnungen 34, 35 positioniert. Dazu weisen die Durchführungsanordnungen 34, 35 jeweils einen Flanschdeckel 38, 39 auf. Die Flanschdeckel 38, 39 weisen voneinander abweichende Formgebungen auf, so dass diese jeweils unabhängig voneinander den ersten Öffnungsbereich 10 beziehungsweise den zweiten Öffnungsbereich 11 der ersten Flanschöffnung 2 überspannen können. Die Flanschdeckel 38, 39 sind im Wesentlichen aus einem Metall gefertigt und mit dem Flanschblatt 12 (bzw. dem jeweiligen Anlagebereich 13, 14 des Flanschblattes 12) verflanscht. Die Flanschdeckel 38, 39 sind von Phasenleiterdurchführungen 40 durchsetzt. Die Phasenleiterdurchführungen 40 weisen jeweils einen elektrisch isolierenden Körper 41 auf, welcher fluiddicht in den jeweiligen Flanschdeckel 38, 39 eingesetzt ist. Jeweils drei elektrisch isolierende Körper 41 der Phasenleiterdurchführungen 40 sind dabei auf einer Kreisbahn symmetrisch verteilt angeordnet und bilden in dem jeweiligen Flanschdeckel 38, 39 die Eckpunkte eines gleichseitigen Dreiecks. Entsprechend ist in der Figur 2 ausgehend von dem dort dargestellten ortsfesten fluchtenden Trennkontakten 33a, 33b ein Aufteilen der weiteren Phasenleiter aus der verdeckten fluchtenden Lage zu verzeichnen, so dass im ersten Öffnungsbereich 10 sowie im zweiten Öffnungsbereich 11 jeweils drei Phasenleiter der Zuleitung 25 bzw. der Ableitung 26 erkennbar sind. Die drei Phasenleiter sind jeweils elektrisch isoliert und fluiddicht in einen der elektrisch isolierenden Körper 41 eingebettet. Außerhalb des Fluidaufnahmeraumes 5 enden die jeweiligen Phasenleiter. Durch geeignete Anschlusselemente, wie beispielsweise Kabelstecker oder ähnliches, sind die in die elektrisch isolierenden Körper 41 eingebetteten Phasenleiter elektrisch kontaktierbar. Über die Phasenleiterdurchführungen 40 sind die im Fluidaufnahmeraum 5 angeordneten Abschnitte der Phasenleiter elektrisch kontaktierbar.

Sofern erwünscht, besteht weiter die Möglichkeit, die Zuleitung 25 mit einem Abzweig 42 auszustatten, so dass über die dritte Flanschöffnung 4 ein weiterer Anschluss an die Zuleitung 25 geführt werden kann. Dabei kann analog, z. B. spiegelbildlich, zum ersten Öffnungsbereich 10 der ersten Flanschöffnung 2 ein Trennschalter angeordnet sein, sowie ein Flanschdeckel mit Phasenleiterdurchführungen 40 verwendet werden.

Die im Inneren des Fluidaufnahmeraumes 5 befindlichen Phasenleiter sind von einem elektrisch isolierenden Fluid umspült. Das elektrisch isolierende Fluid ist hermetisch im Fluidaufnahmeraum 5 eingeschlossen. Entsprechend ist eine vollständige Feststoffisolation für die Phasenleiter im Inneren des Fluidaufnahmeraumes 5 nicht notwendig. Als elektrisch isolierende Fluide eignen sich Flüssigkeiten sowie Gase, insbesondere Schwefelhexafluorid, Kohlendioxid, Stickstoff sowie andere elektronegative Fluide sowie Fluidgemische. Bevorzugt können die Fluide innerhalb des Fluidaufnahmeraumes 5 unter Überdruck gesetzt werden, so dass deren elektrische Isolationsfestigkeit weiter erhöht wird. Die Kapselungsgehäuseanordnung bildet somit eine Barriere (Wandungen) aus, welche ein Verflüchtigen des Fluides verhindert. Weiterhin stellt die Kapselungsgehäuseanordnung der Kapselungsgehäusegrundkörper 1 einen Druckbehälter dar, welcher einem Differenzdruck zwischen dem Fluidaufnahmeraum 5 und der Umgebung des Fluidaufnahmeraumes 5 standhalten muss.

## Patentansprüche

1. Kapselungsgehäuseanordnung für eine Elektroenergieübertragungseinrichtung aufweisend einen Kapselungsgehäusegrundkörper (1) mit einer sich im Wesentlichen quer zu einer Flanschachse erstreckenden Flanschöffnung (2, 3, 4),
**dadurch gekennzeichnet, dass**
die Flanschöffnung (2, 3, 4) einen Flanschstutzen (6, 7, 8) abschließt und von einem Stabilisierungselement (9) gequert ist, wobei das Stabilisierungselement (9) in Richtung der Flanschachse beabstandet zum Kapselungsgehäusegrundkörper (1) einen ersten Wandungsabschnitt des Flanschstutzens mit einem zweiten Wandungsabschnitt des Flanschstutzens (6, 7, 8) verbindet.

2. Kapselungsgehäuseanordnung für eine Elektroenergieübertragungseinrichtung nach Anspruch 1,
**dadurch gekennzeichnet, dass**
das Stabilisierungselement (9) die Flanschöffnung (2, 3, 4) in einen ersten Öffnungsbereich (10) und einen zweiten Öffnungsbereich (11) unterteilt.

3. Kapselungsgehäuseanordnung für eine Elektroenergieübertragungseinrichtung nach einem der Ansprüche 1 oder 2,
**dadurch gekennzeichnet, dass**
das Stabilisierungselement (9) ein Flanschblatt (12) zumindest teilweise trägt.

4. Kapselungsgehäuseanordnung für eine Elektroenergieübertragungseinrichtung nach Anspruch 1 bis Anspruch 3,
**dadurch gekennzeichnet, dass**
das Flanschblatt (12) einen ersten Anlagebereich (13) und einen zweiten Anlagebereich (14) aufweist.

5. Kapselungsgehäuseanordnung für eine Elektroenergieübertragungseinrichtung nach Anspruch 4,
**dadurch gekennzeichnet, dass**
der erste Anlagebereich (13) den ersten Öffnungsbereich (10) und der zweite Anlagebereich (14) den zweiten Öffnungsbereich (11) begrenzt.

6. Kapselungsgehäuseanordnung für eine Elektroenergieübertragungseinrichtung nach Anspruch 4 oder 5,
**dadurch gekennzeichnet, dass**
die Anlagebereiche (13, 14) unabhängig voneinander verflanscht werden können.

7. Kapselungsgehäuseanordnung für eine Elektroenergieübertragungseinrichtung nach Anspruch 1 bis Anspruch 6,
**dadurch gekennzeichnet, dass**
das Stabilisierungselement (9) einen Lagerpunkt für einen Phasenleiter, insbesondere einer elektrischen Schalteinrichtung (21, 29, 31) aufweist.

8. Kapselungsgehäuseanordnung für eine Elektroenergieübertragungseinrichtung nach einem der Ansprüche 1 bis 7,
**dadurch gekennzeichnet, dass**
die Flanschöffnung (2, 3, 4) eine sickenartig eingekerbte, insbesondere eine taillierte Kontur aufweist.

9. Kapselungsgehäuseanordnung für eine Elektroenergieübertragungseinrichtung nach Anspruch 1 bis Anspruch 8,
**dadurch gekennzeichnet, dass**
ein die Flanschöffnung (2, 3, 4) begrenzendes Flanschblatt (12) die Form einer Acht aufweist.

10. Kapselungsgehäuseanordnung für eine Elektroenergieübertragungseinrichtung nach einem der Ansprüche 1 bis 9,
**dadurch gekennzeichnet, dass**
das Stabilisierungselement (9) eine Trennwandung ist.

11. Kapselungsgehäuseanordnung für eine Elektroenergieübertragungseinrichtung nach einem der Ansprüche 1 bis 10,
**dadurch gekennzeichnet, dass**
die Flanschöffnung (2, 3 ,4) von einer ersten und einer zweiten Phasenleiterdurchführung (40) verschließbar ist.

## Claims

1. Encapsulating housing arrangement for an electrical energy transmission device having an encapsulating housing base body (1) with a flange opening (2, 3, 4) extending essentially transversely to a flange axis,
**characterized in that** the flange opening (2, 3, 4) terminates a flange connector (6, 7, 8) and is crossed by a stabilization element (9), wherein the stabilization element (9) connects in the direction of the flange axis at a distance from the encapsulating housing base body (1), a first wall section of the flange connector to a second wall section of the flange connector (6, 7, 8).

2. Encapsulating housing arrangement for an electrical energy transmission device according to Claim 1,
**characterized in that** the stabilization element (9) divides the flange opening (2, 3, 4) into a first opening region (10) and a second opening region (11).

3. Encapsulating housing arrangement for an electrical energy transmission device according to one of Claims 1 and 2,
**characterized in that** the stabilization element (9) at least partially supports a flange leaf (12).

4. Encapsulating housing arrangement for an electrical energy transmission device according to Claim 1 to Claim 3,
**characterized in that** the flange leaf (12) has a first bearing region (13) and a second bearing region (14).

5. Encapsulating housing arrangement for an electrical energy transmission device according to Claim 4,
**characterized in that** the first bearing region (13) bounds the first opening region (10), and the second bearing region (14) bounds the second opening region (11).

6. Encapsulating housing arrangement for an electrical energy transmission device according to Claim 4 or 5,
**characterized in that** the bearing regions (13, 14) can be flanged independently of one another.

7. Encapsulating housing arrangement for an electrical energy transmission device according to Claim 1 to Claim 6,
**characterized in that** the stabilization element (9) has a bearing point for a phase conductor, in particular of an electrical switching device (21, 29, 31).

8. Encapsulating housing arrangement for an electrical energy transmission device according to one of Claims 1 to 7,
**characterized in that** the flange opening (2, 3, 4) has a contour which is notched in the manner of a bead, in particular a tapered contour.

9. Encapsulating housing arrangement for an electrical energy transmission device according to Claim 1 to Claim 8,
**characterized in that** a flange leaf (12) which bounds the flange opening (2, 3, 4) is in the shape of an eight.

10. Encapsulating housing arrangement for an electrical energy transmission device according to one of Claims 1 to 9,
**characterized in that** the stabilization element (9) is a dividing wall.

11. Encapsulating housing arrangement for an electrical energy transmission device according to one of Claims 1 to 10,
**characterized in that** the flange opening (2, 3, 4) can be closed off by a first and a second phase conductor feedthrough (40) .

## Revendications

1. Agencement de cuve blindée d'un dispositif de transport d'énergie électrique, comportant un corps (1) de base de cuve blindée, ayant une ouverture (2, 3, 4) bridée s'étendant sensiblement transversalement à un axe de bride,
**caractérisé en ce que**
l'ouverture (2, 3, 4) bridée ferme un raccord (6, 7, 8) bridé et, traversée par un élément (9) de stabilisation, l'élément (9) de stabilisation reliant, dans la direction de l'axe de la bride à distance du corps (1) de base de la cuve blindée, une première partie de paroi du raccord bridé à une deuxième partie de paroi du raccord (6, 7, 8) bridé.

2. Agencement de cuve blindée d'un dispositif de transport d'énergie électrique suivant la revendication 1,
**caractérisé en ce que**
l'élément (9) de stabilisation subdivise l'ouverture (2, 3, 4) bridée en une première partie (10) d'ouverture et en une deuxième partie (11) d'ouverture.

3. Agencement de cuve blindée d'un dispositif de transport d'énergie électrique suivant l'une des revendications 1 ou 2,
**caractérisé en ce que**
l'élément (9) de stabilisation porte, au moins en partie, une feuille (12) de bride.

4. Agencement de cuve blindée d'un dispositif de transport d'énergie électrique suivant la revendication à la revendication 3,
**caractérisé en ce que**
la feuille (12) de bride a une première partie (13) de contact et une deuxième partie (14) de contact.

5. Agencement de cuve blindée d'un dispositif de transport d'énergie électrique suivant la revendication 4,
**caractérisé en ce que**
la première partie (13) de contact délimite la première partie (10) de l'ouverture et la deuxième partie (14) de contact, la deuxième partie (11) de l'ouverture.

6. Agencement de cuve blindée d'un dispositif de transport d'énergie électrique suivant la revendication 4 ou 5,
**caractérisé en ce que**
les parties (13, 14) de contact peuvent être bridées indépendamment l'une de l'autre.

7. Agencement de cuve blindée d'un dispositif de transport d'énergie électrique suivant la revendication 1 à la revendication 6,
**caractérisé en ce que**
l'élément (9) de stabilisation a un point de support d'un conducteur de phase, notamment d'un dispositif (21, 29, 31) électrique de coupure.

8. Agencement de cuve blindée d'un dispositif de transport d'énergie électrique suivant l'une des revendications 1 à 7,
**caractérisé en ce que**
l'ouverture (2, 3, 4) bridée a un contour entaillé de type à moulure, notamment un contour dimensionné.

9. Agencement de cuve blindée d'un dispositif de transport d'énergie électrique suivant la revendication 1 à la revendication 8,
**caractérisé en ce qu'**
une feuille (12) de bride, délimitant l'ouverture (2, 3, 4) bridée, a la forme d'un huit.

10. Agencement de cuve blindée d'un dispositif de transport d'énergie électrique suivant l'une des revendications 1 à 9,
**caractérisé en ce que**
l'élément (9) de stabilisation est une paroi de séparation.

11. Agencement de cuve blindée d'un dispositif de transport d'énergie électrique suivant l'une des revendications 1 à 10,
**caractérisé en ce que**
l'ouverture (2, 3, 4) bridée peut être fermée par une première et par une deuxième traversée de conducteur de phase.
